# EUROPÄISCHE PATENTSCHRIFT

(11) **EP 3 944 969 B1**
(45) Veröffentlichungstag und Bekanntmachung des Hinweises auf die Patenterteilung: **16.11.2022**
(21) Anmeldenummer: 21186221.4
(22) Anmeldetag: 16.07.2021
(51) Int. Cl.: B60C 23/04

(54) **VERFAHREN ZUM ÜBERWACHEN DES REIFENDRUCKS EINES FAHRZEUGS**
METHOD FOR MONITORING THE TYRE PRESSURE OF A VEHICLE
PROCÉDÉ DE SURVEILLANCE DE LA PRESSION DES PNEUS D'UN VÉHICULE

(30) Priorität: 29.07.2020 DE 102020120052
(43) Veröffentlichungstag der Anmeldung: 02.02.2022
(73) Patentinhaber: Huf Baolong Electronics Bretten GmbH, 75015 Bretten (DE)
(72) Erfinder: Wagner, Markus, 71638 Ludwigsburg (DE); Ott, Heinrich, 71701 Schwieberdingen (DE)
(74) Vertreter: Twelmeier Mommer & Partner

(56) Entgegenhaltungen:
- DE-A1-102011 050 985
- US-A1- 2009 308 150

## Beschreibung

Die Erfindung betrifft ein Verfahren zum Überwachen des Reifendrucks eines Fahrzeugs.

Reifendrucküberwachungseinheiten, die einen Drucksensor und einen Temperatursensor sowie einen Beschleunigungssensor enthalten, werden an Fahrzeugrädern montiert und können dann drahtlos Informationen über den Reifendruck zur Verfügung stellen, d.h. an eine Auswerteeinheit des Fahrzeugs senden.

Ein ständiges Problem bei der Entwicklung von Reifendrucküberwachungseinheiten ist ein Zielkonflikt zwischen einem möglichst stromsparenden Betrieb einerseits und einer möglichst aktuellen und zuverlässigen Bereitstellung von Druckdaten. Je häufiger Informationen über den Reifendruck gesendet werden, desto größer ist grundsätzlich der Energieverbrauch einer Reifendrucküberwachungseinheit. Moderne Reifendrucküberwachungseinheiten unterscheiden deshalb anhand von Signalen ihres Beschleunigungssensors, ob ein Fahrzeug fährt oder parkt. Wird eine Rollbewegung erkannt, geht die Reifendrucküberwachungseinheit in einen Fahrtmodus über, in dem der Reifendruck gemessen und in regelmäßigen Zeitabständen gesendet wird. Bei stehendem Fahrzeug geht die Reifendrucküberwachungseinheit in einen Parkmodus über, in dem die Sendetätigkeit eingeschränkt oder sogar ganz eingestellt ist.

Um den Stromverbrauch zu reduzieren, sind etwa aus der WO 2009/132623 A1 Reifendrucküberwachungseinheiten bekannt, deren Sendetätigkeit bei parkendem Fahrzeug eingestellt ist. Erst wenn von einem Beschleunigungssensor der Reifendrucküberwachungseinheiten eine Rollbewegung detektiert wird, geht die Reifendrucküberwachungseinheit in den Fahrtmodus über, in dem dann der Reifendruck gemessen und Druckinformationen gesendet werden.

Aktuelle Druckinformationen stehen bei dem aus der WO 2009/132623 A1 bekannten System aber erst einige Zeit nach Fahrtbeginn zur Verfügung. Damit ein für die Fahrsicherheit kritischer Reifendruck schon zu einem früheren Zeitpunkt zur Verfügung steht, sind auch Systeme bekannt, mit denen der Reifendruck auch bei parkendem Fahrzeug gemessen wird, etwa in Zeitintervallen von einer Stunde. Sobald dabei ein kritischer Druckabfall festgestellt wird, wird die Sendetätigkeit deutlich erhöht, indem die Reifendrucküberwachungseinheit in einen Warnmodus übergeht, in dem alle 10 bis 20 Sekunden eine Druckinformation gesendet wird. Bei Fahrtbeginn kann ein Fahrer somit frühzeitig auf einen zu geringen Reifendruck hingewiesen werden. Weitere Reifendrucküberwachungssysteme sind aus den Druckschriften DE102011050985 A1 und US2009/308150 A1 bekannt.

Aufgabe der vorliegenden Erfindung ist es, einen Weg aufzuzeigen, wie der Zielkonflikt zwischen einem möglichst stromsparenden Betrieb einerseits und einer möglichst aktuellen und zuverlässigen Bereitstellung von Druckdaten andererseits noch besser gelöst werden kann.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Reifendrucküberwachungseinheiten haben im Warnmodus wegen ihrer intensiven Sendetätigkeit einen relativ hohen Energiebedarf. Um einen Energiespeicher der Reifendrucküberwachungseinheit, beispielsweise eine Batterie, nicht übermäßig zu belasten, ist deshalb wichtig, dass der Warnmodus nur dann aktiviert wird, wenn auch tatsächlich ein problematischer Druckverlust aufgetreten ist, vor dem der Fahrer des Fahrzeugs gewarnt werden soll.

Im einfachsten Fall kann ein Schwellenwert für den Reifendruck fest vorgegeben werden und der Warnmodus aktiviert werden, wenn der Reifendruck unter diesen Schwellenwert fällt. Wenn beispielsweise ein Fahrzeugreifen für einen sicheren Betrieb einen Druck von mindestens 180 kPa benötigt, kann mit einem Schwellenwert von 180 kPa der Fahrer bei Fahrtbeginn vor einem platten Reifen gewarnt werden. Allerdings liegt der optimale Reifendruck eines Fahrzeugreifens in der Regel bei etwa 250 kPa, so dass ein Druckverlust von 70 kPa auftreten kann, bevor der Warnmodus aktiviert wird. Wenn beim Parken über einen Zeitraum von einigen Stunden ein Druckverlust von 70 kPa auftritt, deutet dies darauf hin, dass der Reifen ein Leck hat. Eine entsprechende Warnung des Fahrers wäre in einem solchen Fall wünschenswert. Man könnte deshalb daran denken, den Schwellenwert heraufzusetzen, beispielsweise auf 210 kPa. Allerdings würde dies dazu führen, dass der Warnmodus dann in vielen Fällen aktiviert wird, in denen weder ein problematischer Reifendruck herrscht noch der Reifen ein Leck hat.

Um diese Probleme zu vermeiden, wird erfindungsgemäß der Schwellenwert für die Aktivierung des Warnmodus aus einem Reifendruckwert ermittelt, der während der letzten Fahrt ermittelt wurde, also während der Zeit ermittelt wurde, in der die Reifendrucküberwachungseinheit zuletzt im Fahrtmodus war. Aus gemessenen Druck- und Temperaturdaten kann die Luftmenge bzw. die Dichte der Luft im Reifen berechnet werden und dann daraus ein Schwellenwert gewonnen werden, dessen Unterschreiten auf ein Leck des Reifens schließen lässt.

Obwohl sich die Temperatur eines Reifens stark ändern kann, lässt sich der Rechenaufwand, der mit einer Berücksichtigung von Druck- und Temperaturdaten verbunden ist, vorteilhaft vermeiden, indem der Schwellenwert aus dem Minimum der Reifendruckwerte berechnet wird, die in dem letzten Fahrtmodus für den betreffenden Reifen ermittelt wurden. Dieses Minimum wird im Folgenden als Minimaldruck bezeichnet. Der Schwellenwert kann beispielsweise aus dem Minimaldruck (also dem niedrigsten Druckwert, der während der Zeit ermittelt wurde, in der die Reifendrucküberwachungseinheit zuletzt im Fahrtmodus war) ermittelt werden, indem ein fester Wert von ihm subtrahiert wird, beispielsweise ein Wert von 20 kPa bis 50 kPa. Vorteilhaft kann so der Schwellenwert mit sehr wenig Rechenaufwand ermittelt werden, so dass die Reifendrucküberwachungseinheit kostengünstig mit einem sehr einfachen Rechenwerk realisiert werden kann.

Während der Fahrt erwärmt sich ein Reifen, was zu einem Anstieg des Reifendrucks führt. Der Minimalwert des Reifendrucks wird deshalb im Regelfall dann gemessen, wenn die Reifentemperatur minimal ist. Beim Parken des Fahrzeugs kann es vorkommen, dass die Reifentemperatur unter diesen Minimalwert absinkt. Um unnötige Aktivierungen des Warnmodus zu vermeiden ist es deshalb vorteilhaft, als Schwellenwert nicht den Minimalwert des Reifendrucks von der letzten Fahrt zu verwenden, sondern von dem Minimalwert einen festen Wert abzuziehen, der ausreichend groß ist, dass eine Abkühlung des Reifens, wie sie etwa über Nacht auftreten kann, nicht dazu führt, dass Schwellenwert unterschritten wird.

Eine vorteilhafte Weiterbildung der Erfindung sieht vor, dass der Reifendruck in dem Warnmodus in Zeitabständen von weniger als zehn Sekunden, vorzugsweise in weniger als acht Sekunden gemessen wird. Auf diese Weise kann ein Unterschreiten des Schwellenwertes rasch erkannt werden.

Eine vorteilhafte Weiterbildung der Erfindung sieht vor, dass in dem Warnmodus Druckdaten in Zeitabständen von weniger als zehn Sekunden, vorzugsweise weniger als acht Sekunden gesendet werden. Die Auswerteeinheit des Fahrzeugs kann bei parkendem Fahrzeug vorteilhaft deaktiviert werden, so dass diese nicht empfangsbereit ist und die Fahrzeugbatterie nicht unnötig belastet wird. Erst wenn ein Fahrer das Fahrzeug starten will (was beispielsweise am Entriegeln einer Fahrzeugtür erkannt werden kann), wird die Auswerteeinheit empfangsbereit. Durch eine Sendetätigkeit im Warnmodus in Zeitabständen von weniger als zehn Sekunden kann ein Fahrer dennoch sehr frühzeitig und in der Regel vor Fahrtbeginn auf einen problematischen Druckverlust hingewiesen werden.

Eine vorteilhafte Weiterbildung der Erfindung sieht vor, dass die Reifenüberwachungseinheit auch dann in den Warnmodus übergeht, wenn ein vorgegebener Grenzwert unterschritten wird. Dieser Grenzwert wird bevorzugt so gewählt, dass bei seinem Unterschreiten eine sichere Fahrt nicht mehr möglich ist. Es kann nämlich vorkommen, dass Fahrzeugreifen durch einen natürlichen Druckverlust über lange Zeit mit einem Druck betrieben werden, bei dem ein sicherer Fahrbetrieb gerade noch möglich ist. In solchen Fällen, die an sich durch regelmäßige Wartung vermieden werden sollten, kann es vorkommen, dass der Grenzwert durch ein geringfügiges Absinken des Reifendrucks unterschritten wird, das durch einen Vergleich mit einem anhand des Minimaldrucks ermittelten Schwellenwerts nicht erkannt wird.

Weitere Einzelheiten und Vorteile der Erfindung werden an einem Ausführungsbeispiel unter Bezugnahme auf die beigefügte Zeichnung erläutert. Es zeigt:

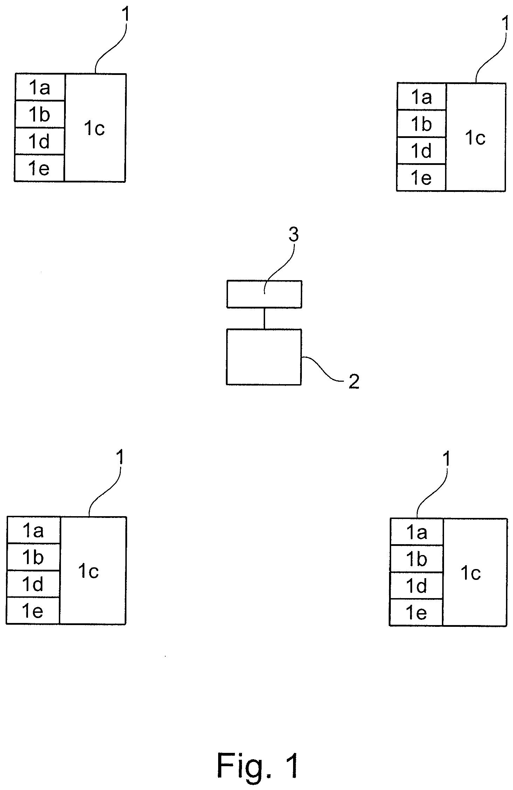

- Fig. 1: eine schematische Darstellung eines Reifendrucküberwachungssystems eines Fahrzeugs.

Ein System zum Überwachen des Reifendrucks in Fahrzeugen umfasst mehrere Reifendrucküberwachungseinheiten 1, die jeweils in einem der Luftreifen eines Fahrzeugs angeordnet sind und einen Drucksensor 1a, einen Beschleunigungssensor 1b, eine Steuereinheit 1c, eine Stromquelle 1d, z.B. eine Batterie, und einen Sender 1e aufweisen. Zu dem System gehören außerdem eine ortsfest am Fahrzeug angeordnete Auswerteeinheit 2, um von den Reifendrucküberwachungseinheiten 1 gesendete Datentelegramme, die jeweils eine Druckinformation und eine charakteristische Kennung der sendenden Reifendrucküberwachungseinheiten enthalten, auszuwerten. An die Auswerteeinheit 2 ist ein Empfänger 3 angeschlossen.

Die Reifendrucküberwachungseinheiten 1 können in einem Parkmodus sowie in einem Fahrtmodus arbeiten. In dem Parkmodus wird nicht gesendet und der Sender 1e ist deaktiviert. Beim Übergang in den Fahrtmodus wird der Sender 1e aktiviert. In dem Fahrmodus werden in vorgegebenen Zeitabständen Druckinformationen drahtlos gesendet. Der Übergang von dem Parkmodus in den Fahrtmodus und umgekehrt erfolgt in Abhängigkeit von Signalen des Beschleunigungssensors 1b der jeweiligen Reifendrucküberwachungseinheit 1.

Wie bereits erwähnt, wird der Reifendruck in regelmäßigen Zeitabständen gemessen, während sich die Reifendrucküberwachungseinheit im Fahrmodus befindet. Der erste Reifendruckwert, der nach dem Übergang in den Fahrtmodus gemessen wird, wird in einen Speicher der Steuereinheit 1c geschrieben. Jeder weitere Druckwert, der in dem Fahrmodus gemessen wird, wird mit dem Druckwert in diesem Speicher verglichen und der Speicher mit dem neuen Wert überschrieben, falls der neue Wert kleiner als der gespeicherte Wert ist. Auf diese Weise wird erreicht, dass beim Übergang in den Parkmodus in dem Speicher der kleinste Druckwert gespeichert ist, der in der Zeit gemessen wurde, in der die Reifendrucküberwachungseinheit 1 zuvor im Fahrtmodus war. Wenn sich die Reifendrucküberwachungseinheit 1 im Parkmodus befindet, ist in dem Speicher also der Minimalwert des Reifendrucks gespeichert, der während der letzten Fahrt gemessen wurde.

Im Parkmodus wird in Zeitabständen von weniger als 10 Sekunden, beispielsweise 5 bis 8 Sekunden, der Reifendruck mit dem Drucksensor 1a gemessen und dann unter Verwendung des Minimalwerts überprüft, ob ein kritischer Druckabfall aufgetreten ist. Dazu wird von dem Minimalwert ein fest vorgegebener Wert von beispielsweise 20 kPa bis 50 kPa abzogen und dann geprüft, ob der aktuell gemessene Druckwert diese Differenz unterschreitet. Dieser Vergleich kann implementiert werden, indem der fest vorgegebene Wert von beispielsweise 20 kPa bis 50 kPa zu dem aktuellen Druckwert addiert wird und dann geprüft wird, ob diese Summe kleiner als der Minimalwert ist.

Ist dies der Fall, geht die Reifendrucküberwachungseinheit 1 in einen Warnmodus über, in dem dann Druckdaten in Zeitabständen von weniger als zehn Sekunden, beispielsweise in Zeitabständen von fünf bis acht Sekunden gesendet werden. Die Reifendrucküberwachungseinheit 1 bleibt dann in dem Warnmodus bis zum Übergang in den Fahrmodus bei Beginn der nächsten Fahrt.

Die Reifendrucküberwachungseinheit 1 geht aus dem Parkmodus auch dann in den Warnmodus über, wenn ein vorgegebener Grenzwert von z.B. 180 kPa unterschritten wird. Auf diese Weise kann ein Fahrer zuverlässig vor jedem problematischen Druckabfall gewarnt werden.

## Patentansprüche

1. Verfahren zum Überwachen des Reifendrucks eines Fahrzeugs mittels einer Reifendrucküberwachungseinheit (1), die einen Drucksensor (1a) zum Messen des Reifendrucks, einen Beschleunigungssensor (1b) und einen Sender (1e) zum drahtlosen Übertragen von Reifendruckdaten enthält, und einer Auswerteeinheit (2) des Fahrzeugs, die einen Empfänger (3) aufweist, wobei die Reifendrucküberwachungseinheit (1) in Abhängigkeit von Signalen des Beschleunigungssensors (1b) zwischen einem Fahrtmodus, in dem regelmäßig Druckdaten gesendet werden, und einem Parkmodus wechselt,
in dem Parkmodus der Reifendruck regelmäßig mit dem Drucksensor (1a) gemessen wird,
der gemessene Reifendruck mit einem Schwellenwert verglichen wird und, falls der gemessene Druckwert den Schwellenwert unterschreitet, die Reifendrucküberwachungseinheit (1) aus dem Parkmodus in einen Warnmodus übergeht, in dem dann in vorgegebenen Zeitabständen Druckdaten von der Reifendrucküberwachungseinheit (1) gesendet werden,
**dadurch gekennzeichnet, dass**
der Schwellenwert aus einem Reifendruck berechnet wird, der während der Zeit ermittelt wurde, in der die Reifendrucküberwachungseinheit (1) zuletzt im Fahrtmodus war.

2. Verfahren nach Anspruch 1, **dadurch gekennzeichnet, dass** der Schwellenwert aus einem Minimaldruck berechnet wird, der während der Zeit ermittelt wurde, in der die Reifendrucküberwachungseinheit (1) zuletzt im Fahrtmodus war.

3. Verfahren nach Anspruch 2, **dadurch gekennzeichnet, dass** der Schwellenwert durch Subtraktion eines vorgegebenen Wertes von dem Minimaldruck berechnet wird.

4. Verfahren nach Anspruch 3, **dadurch gekennzeichnet, dass** der vorgegebene Wert wenigstens 20 kPa beträgt.

5. Verfahren nach Anspruch 3 oder 4, **dadurch gekennzeichnet, dass** der vorgegebene Wert nicht mehr als 50 kPa beträgt.

6. Verfahren nach einem der vorstehenden Ansprüche, **dadurch gekennzeichnet, dass** der Reifendruck in dem Warnmodus in Zeitabständen von weniger als zehn Sekunden, vorzugsweise in weniger als acht Sekunden gemessen wird.

7. Verfahren nach einem der vorstehenden Ansprüche, **dadurch gekennzeichnet, dass** in dem Warnmodus Druckdaten in Zeitabständen von weniger als zehn Sekunden, vorzugsweise weniger als acht Sekunden gesendet werden.

8. Verfahren nach einem der vorstehenden Ansprüche, **dadurch gekennzeichnet, dass** die Reifendrucküberwachungseinheit (1) den Warnmodus erst verlässt, wenn mit dem Beschleunigungssensor (1b) ein Fahrtbeginn detektiert wird.

9. Verfahren nach einem der vorstehenden Ansprüche, **dadurch gekennzeichnet, dass** in dem Parkmodus jede Sendetätigkeit unterbleibt.

10. Verfahren nach einem der vorstehenden Ansprüche, **dadurch gekennzeichnet, dass** das die Reifendrucküberwachungseinheit (1) aus dem Parkmodus auch dann in den Warnmodus übergeht, wenn ein vorgegebener Grenzwert unterschritten wird.

## Claims

1. A method for monitoring the tyre pressure of a vehicle by means of a tyre pressure monitoring unit (1) comprising a pressure sensor (1a) for measuring the tyre pressure, an acceleration sensor (1b), and a transmitter (1e) for wireless transmission of tyre pressure data, and an evaluation unit (2) of the vehicle comprising a receiver (3), wherein the
tyre pressure monitoring unit (1) switches as a function of signals of the acceleration sensor (1b) between a drive mode, in which pressure data is sent regularly, and a parking mode,
in the parking mode the tyre pressure is regularly measured by means of the pressure sensor (1a),
the measured tyre pressure is compared with a threshold value and, if the measured pressure value falls below the threshold value, the tyre pressure monitoring unit (1) passes from the parking mode to a warning mode in which pressure data is then sent by the tyre pressure monitoring unit (1) at predetermined time intervals,
**characterised in that**
the threshold value is calculated from a tyre pressure, which has been determined during the time in which the tyre pressure monitoring unit (1) was last in drive mode.

2. The method according to patent claim 1, **characterised in that** the threshold value is calculated from a minimum pressure, which has been determined during the time, in which the tyre pressure monitoring unit (1) was last in drive mode.

3. The method according to patent claim 2, **characterised in that** the threshold value is calculated by subtracting a predetermined value from the minimum pressure.

4. The method according to patent claim 3, **characterised in that** the predetermined value is at least 20 kPa.

5. The method according to patent claim 3 or 4, **characterised in that** the predetermined value does not exceed 50 kPa.

6. The method according to any one of the preceding claims, **characterised in that** the tyre pressure is measured in the warning mode at time intervals of less than ten seconds, preferably less than eight seconds.

7. The method according to any one of the preceding claims, **characterized in that** pressure data is sent in the warning mode at time intervals of less than ten seconds, preferably less than eight seconds.

8. The method according to any one of the preceding claims, **characterised in that** the tyre pressure monitoring unit (1) exits the warning mode only, when start of driving is detected by means of the acceleration sensor (1b).

9. The method according to any one of the preceding claims, **characterised in that** any transmitting activity is omitted in the parking mode.

10. The method according to any one of the preceding claims, **characterised in that** the tyre pressure monitoring unit (1) passes from the parking mode to the warning mode, also if the value falls below a predetermined threshold value.

## Revendications

1. Procédé de surveillance de la pression des pneus d'un véhicule au moyen d'une unité de surveillance de pression de pneus (1) comportant un capteur de pression (1a) pour mesurer la pression des pneu, un capteur d'accélération (1b) et un transmetteur (1e) pour la transmission sans fil des données de pression de pneus, et une unité d'évaluation (2) du véhicule comportant un récepteur (3), dans lequel l'unité de surveillance de pression de pneus (1), en fonction des signaux du capteur d'accélération (1b), alterne entre un mode de conduite, dans lequel des données de pression sont régulièrement envoyées, et un mode de stationnement,
dans le mode de stationnement, la pression des pneus est régulièrement mesurée au moyen du capteur de pression (1a),
la pression des pneus mesurée est comparée à une valeur seuil et, si la valeur de la pression mesurée est inférieure à la valeur seuil, l'unité de surveillance de pression de pneus (1) passe d'un mode de stationnement en mode d'alerte, dans lequel des données de pression sont ensuite envoyées par l'unité de surveillance de pression de pneus (1) à des intervalles prédéfinis,
**caractérisée en ce que**
la valeur seuil est calculée à partir d'une pression des pneus qui a été déterminée pendant le temps, dans lequel l'unité de surveillance de pression de pneus (1) était en mode de conduite pour la dernière fois.

2. Procédé selon la revendication 1, **caractérisée en ce que** la valeur seuil est calculée à partir d'une pression minimum, qui a été déterminée pendant le temps, dans lequel l'unité de surveillance de pression de pneus (1) était en mode de conduite pour la dernière fois.

3. Procédé selon la revendication 2, **caractérisée en ce que** la valeur seuil est calculée en soustrayant une valeur prédéfinie de la pression minimale.

4. Procédé selon la revendication 3, **caractérisée en ce que** la valeur prédéfinie est d'au moins 20 kPa.

5. Procédé selon la revendication 3 ou 4, **caractérisée en ce que** la valeur prédéfinie n'est pas supérieure à 50 kPa.

6. Procédé selon l'une quelconque des revendications, **caractérisée en ce que** la pression des pneus est mesurée en mode d'alerte à des intervalles de temps inférieurs à dix secondes, de préférence en moins de huit secondes.

7. Procédé selon l'une quelconque des revendications précédentes, **caractérisée en ce que** dans le mode d'alerte, des données d'impression sont envoyées à des intervalles de temps inférieurs à dix secondes, de préférence inférieurs à huit secondes.

8. Procédé selon l'une quelconque des revendications précédentes, **caractérisée en ce que** l'unité de surveillance de pression de pneus (1) ne quitte le mode d'alerte que lorsqu'un début de trajet est détecté par le capteur d'accélération (1b).

9. Procédé selon l'une quelconque des revendications précédentes, **caractérisée en ce que** toute activité de transmission est supprimée en mode de stationnement.

10. Procédé selon l'une quelconque des revendications précédentes, **caractérisée en ce que** l'unité de surveillance de pression de pneus (1) passe aussi du mode de stationnement au mode d'alerte, si une valeur est inférieure à une valeur limite prédéfinie.
